# EUROPEAN PATENT APPLICATION

(11) **EP 4 207 457 A1**
(43) Date of publication of application: **05.07.2023**
(21) Application number: 22848002.6
(22) Date of filing: 26.05.2022
(51) Int. Cl.: H01M 50/284, H01M 50/298

(54) **BATTERY PROTECTION PLATE AND MANUFACTURING METHOD THEREFOR, BATTERY, AND ELECTRONIC DEVICE**

(30) Priority: 30.07.2021 CN 202110873749
(71) Applicant: Dongguan NVT Technology Limited, Donguan, Guangdong 523000 (CN)
(72) Inventor: CAO, Yifang, Dongguan, Guangdong 523000 (CN); ZHAO, Yabin, Dongguan, Guangdong 523000 (CN); ZHANG, Yanting, Dongguan, Guangdong 523000 (CN); LIANG, Yumei, Dongguan, Guangdong 523000 (CN)
(74) Representative: Klunker IP Patentanwälte PartG mbB
(86) International application number: PCT/CN2022/095273
(87) International publication number: WO 2023/005392

(57) **Abstract**

Implementations of this application relate to the field of battery technologies and disclose a battery protection board and a manufacturing method thereof, a battery, and an electronic device. The battery protection board includes a first circuit board, a second circuit board, and a tab connecting portion. The first circuit board includes a first substrate, electronic components, and an insulation layer, where the first substrate includes a first surface and a second surface that are provided back to back with each other, several of the electronic components are disposed on the first surface, and the insulation layer covers the electronic components on the first surface. The second circuit board includes a second substrate, where the second substrate includes a third surface and a fourth surface that are provided back to back with each other. The third surface is connected with the second surface, and the tab connecting portion is disposed on the fourth surface. Through the above arrangement, the first substrate has sufficient space reserved for welding the second substrate, improving reliability of connection between the first circuit board and the second circuit board, optimizing spatial layout of the battery protection board, and ensuring versatility of the first circuit board. This improves versatility of the battery protection board to some extent.

## Description

### CROSS-REFERENCE TO RELATED APPLICATIONS

This application claims priority to Chinese Patent Application No. 2021108737497, filed on July 30, 2021 and entitled "BATTERY PROTECTION BOARD AND MANUFACTURING METHOD THEREOF, BATTERY, AND ELECTRONIC DEVICE", which is incorporated herein by reference in its entirety.

### TECHNICAL FIELD

Embodiments of this application relate to the field of battery technologies, and in particular, to a battery protection board and a manufacturing method thereof, a battery, and an electronic device.

### BACKGROUND

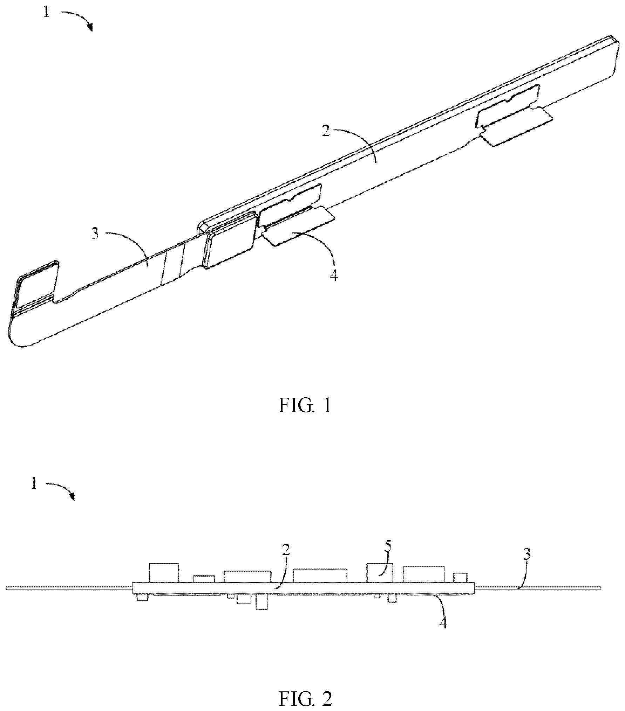

Currently, lithium-ion batteries have already become the best choice of power source for consumer portable electronic products. As shown in FIG 1, a battery protection board 1 is an integrated circuit board used in a battery for preventing problems such as overcharge, overdischarge, and short circuit. The battery protection board 1 includes a rigid board 2 and a flex board 3. Electronic components and connecting pieces 4 are mounted onto two opposite sides of the rigid board 2 respectively. During production of the battery protection board 1, the flex board 3 needs to be welded to the side of the rigid board 2 with the connecting pieces 4 mounted. However, the connecting pieces 4 take up some space for welding on the rigid board 2, so that insufficient space is provided for welding the flex board 3 to the rigid board 2. In addition, the connecting pieces 4 on the rigid board 1 often need to be arranged correspondingly to positions of tabs of a battery cell. When the positions of the tabs of the battery cell change, the positions of the connecting pieces 4 on the rigid board 2 need to be changed accordingly. In addition, when the positions of the connecting pieces 4 change, the rigid board 1 also needs to be redesigned. Therefore, the battery protection board 1 has poor versatility.

As shown in FIG 2, in order to solve the problem of insufficient space for welding, a common technical approach is to combine a rigid board 2 and a flex board 3 by lamination, so that an end of the flex board 3 is embedded into the rigid board 2 to form a rigid-flex board, and then, electronic elements 5 and connecting pieces 4 are attached to two opposite sides of the rigid board 2 respectively to avoid an existing problem of poor reliability with welding. As the connecting pieces 4 are disposed on the rigid board 1, the problem of poor versatility remains. In addition, when a snap-fit position of a device to be powered changes, the flex board 3 needs to be redesigned to adapt to the change of the snap-fit position. Because the rigid board 2 and the flex board 3 are laminated to form a rigid-flex board, it is also often necessary to redesign the rigid board 2 to adapt to connection with the flex board 3 at the lamination. Therefore, the battery protection board has worse versatility yet higher production costs.

### SUMMARY

A technical problem to be resolved in implementations of this application is to provide a battery protection board and a manufacturing method thereof, a battery, and an electronic device, to resolve problems that circuit boards have poor versatility and insufficient space for welding.

To resolve the foregoing technical problem, a technical solution used in the implementations of this application is as follows.

According to a first aspect, a battery protection board is provided, where the battery protection board includes a first circuit board, a second circuit board, and a tab connecting portion. The first circuit board includes a first substrate, electronic components, and an insulation layer, where the first substrate includes a first surface and a second surface that are provided back to back with each other, several of the electronic components are disposed on the first surface, and the insulation layer covers the electronic components on the first surface. The second circuit board includes a second substrate, where the second substrate includes a third surface and a fourth surface that are provided back to back with each other. The third surface is connected with the second surface, and the tab connecting portion is disposed on the fourth surface. The tab connecting portion is disposed on the fourth surface of the second substrate to prevent the tab connecting portion from occupying space on the second surface of the first substrate for welding the second substrate, so that sufficient space for welding is reserved on the second surface of the first substrate, allowing the third surface of the second substrate to be connected with the second surface of the first substrate, which improves reliability of connection between the first circuit board and the second circuit board and optimizes spatial layout of the battery protection board. In addition, by changing a position of the tab connecting portion on the second circuit board, it is easier to adapt to different tab positions, and only a structural size of the second circuit board needs to be changed accordingly to adapt to a different snap-fit position of a device to be powered. This ensures versatility of the first circuit board, thereby improving versatility of the battery protection board to some extent.

In some embodiments, the electronic components are electronic components with individual packages, which isolates internal elements of the electronic components from the outside, thereby preventing external impurities from corroding internal circuits of the electronic components to cause degradation in electrical performance, and preventing surfaces, connecting leads, and the like of the electronic components from being damaged by external force and affected by external environment.

In some embodiments, the electronic components are electronic components without individual packages, which reduces thicknesses of the electronic components, thereby reducing thickness of the first circuit board and space occupied by the battery protection board. In addition, with the individual packages saved, the bill of material of the electronic components can be reduced.

In some embodiments, a plurality of first circuit boards are provided, and the plurality of first circuit boards are connected to the second circuit board. The above arrangement allows a plurality of first circuit boards to be combined in a variety of ways and to be customized or flexibly produced depending on needs of customers or products, thereby improving versatility of the battery protection board, shortening development cycle of the first circuit board, reducing production costs, and improving integration level.

In some embodiments, the second surface and the third surface are correspondingly provided with a plurality of sets of bonding pads, and the first substrate is connected to the second substrate by welding through the plurality of sets of bonding pads. By means of welding through the bonding pads, the first substrate and the second substrate can be stably and fixedly connected, and electrical connection between the first substrate and the second substrate can be achieved by welding through the bonding pads.

In some embodiments, each set of the bonding pads is disposed in a length direction of the second surface, and the plurality of sets of bonding pads are disposed in a width direction of the second surface, so that the plurality of sets of bonding pads spread over the second surface according to a shape and size of the second surface, effectively balancing temperature of a welding zone of the first substrate and thereby reducing a temperature rise of the first substrate.

In some embodiments, the second circuit board further includes connectors, at least two connectors are provided, and the at least two connectors are disposed at two ends of the second substrate respectively. The above arrangement makes the second circuit board have a shunting effect, allowing current to flow from the first substrate to the connectors at the two ends of the second substrate, or to flow from the connectors at the two ends of the second substrate to the first substrate, which prevents the second circuit board from overheating due to overcurrent, achieving a heat dissipation effect on the second circuit board and thereby allowing the second circuit board to be connected to a high-power device to be powered. In addition, the above arrangement allows convenient assembly of the second circuit board and the device to be powered.

In some embodiments, the first substrate is a rigid printed board, and the second substrate is a flex printed board. With electronic components being arranged on the rigid printed board and then the rigid printed board as a whole being electrically connected to the flex printed board by means of welding through the bonding pads, the rigid printed board can be produced on a large scale and used in combination with flex printed boards of different shapes and sizes, which greatly broadens the scope of use and flexibility of the printed board.

According to a second aspect, a battery is further provided, where the battery includes a battery cell and a protection board connected to the battery cell, where the protection board is the foregoing battery protection board. Using the battery protection board in the foregoing embodiment optimizes space at the connection between the battery cell and the battery protection board and improves versatility of the battery to some extent.

In some embodiments, the battery cell includes a first tab and a second tab that have a same polarity and a third tab that is opposite in polarity to the first tab. Three tab connecting portions are provided on the protection board, and the three tab connecting portions are respectively connected to the first tab, the second tab, and the third tab. When the number of tabs is more than three, the problem of insufficient space for welding on the circuit board is more prominent. In this embodiment, the tab connecting portions are disposed on the second circuit board, which prevents the tab connecting portions from occupying space for welding on the first circuit board and increases a weldable area between the first circuit board and the second circuit board. In this way, sufficient space for welding is reserved on the first circuit board for welding the second circuit board onto the first circuit board, improving reliability of connection between the first circuit board and the second circuit board and optimizing spatial layout of the protection board.

According to a third aspect, an electronic device is further provided, where the electronic device includes the foregoing battery.

According to a fourth aspect, a manufacturing method of battery protection board is further provided, where the method includes the following steps: mounting electronic components onto a first surface of a first substrate and forming, on the first surface of the first substrate, an insulation layer covering the electronic components through injection molding to form a first circuit board; attaching the first circuit board onto a third surface of a second circuit board; and attaching a tab connecting portion onto a fourth surface of the second circuit board.

In this embodiment, the tab connecting portion is disposed on the second substrate, preventing the tab connecting portion from occupying space for welding on the first circuit board, so that sufficient space for welding is reserved on the first circuit board for welding the second circuit board onto the first circuit board, improving reliability of connection between the first circuit board and the second circuit board and optimizing spatial layout of the battery protection board. In addition, the first circuit board and the second circuit board are separately supplied, and after the first circuit board is made separately, the first circuit board is attached to the second circuit board, so that the first circuit board can be adapted to the second circuit boards of different sizes, that is, the first circuit board can be configured for the second circuit boards of different sizes based on needs. In this way, the battery protection board can be matched with different battery products or different devices to be powered, and the second circuit board can be prevented from being crushed when the electronic components are packaged by injection molding.

In some embodiments, the mounting electronic components onto a first surface of a first substrate, and forming, on the first surface of the first substrate, an insulation layer covering the electronic components through injection molding to form a first circuit board further includes: providing a jointed board, where the jointed board includes a plurality of first substrates that are interconnected; mounting a set of the electronic components onto the first surface of each of the first substrates; forming an insulation layer by injection molding on the first surface of the first substrate; and breaking up the jointed board to form a plurality of separate first circuit boards.

In this embodiment, the jointed board is provided, and the electronic components are mounted and packaged in sequence on the jointed board, which greatly improves efficiency of manufacturing first circuit boards and ensures size consistency of first circuit boards.

### BRIEF DESCRIPTION OF DRAWINGS

One or more embodiments are used as examples for description by using figures in corresponding accompanying drawings. These example descriptions impose no limitation on the embodiments. Elements with a same reference sign in the accompanying drawings represent similar elements. Unless otherwise stated, the figures in the accompanying drawings impose no limitation on scale.
FIG 1 is a three-dimensional structural diagram of a battery protection board in the prior art;
FIG 2 is a three-dimensional structural diagram of another battery protection board in the prior art;
FIG 3 is a three-dimensional structural diagram of a battery protection board according to an embodiment of this application;
FIG 4 is a three-dimensional structural diagram of the battery protection board in FIG 1 from another perspective;
FIG 5 is a structural exploded view of the battery protection board in FIG 1;
FIG 6 is a schematic structural diagram of a battery protection board according to an embodiment of this application, where a partially enlarged view of part A is shown;
FIG 7 is a schematic structural diagram of a battery protection board according to another embodiment of this application, where a partially enlarged view of part B is shown;
FIG 8 is a schematic structural diagram of a battery protection board according to still another embodiment of this application;
FIG 9 is a three-dimensional structural diagram of a first substrate of the battery protection board in FIG 5 from another perspective; and
FIG 10 is a schematic structural diagram of a battery according to yet another embodiment of this application.

### DESCRIPTION OF EMBODIMENTS

For ease of understanding this application, the following further describes this application in detail with reference to the accompanying drawings and specific embodiments. It should be noted that when a component is referred to as being "fixed to" or "mounted to" another component, it may be directly fixed to the another component, or there may be one or more components in between. When a component is deemed as being "connected to" another component, it may be directly connected to the another component, or there may be one or more components in between. In the descriptions of this application, the orientations or positional relationships indicated by the terms "up", "down", "inside", "outside", "perpendicular", "horizontal", and the like are based on the orientations or positional relationships shown in the accompanying drawings. Such terms are intended merely for the ease and brevity of description of this application without indicating or implying that the apparatuses or components mentioned in this application must have specified orientations or must be constructed and operated in the specified orientations, and therefore shall not be construed as any limitations on this application. In addition, the terms "first" and "second" are merely intended for a purpose of description, and shall not be understood as an indication or implication of relative importance.

Unless otherwise defined, all technical and scientific terms used herein shall have the same meanings as commonly understood by those skilled in the art to which this application belongs. The terms used in the specification of this application are merely intended to describe specific embodiments but not to constitute any limitations on this application. The term "and/or" used herein includes any and all combinations of one or more associated items that are listed.

In addition, technical features involved in different embodiments of this application that are described below may be combined as long as they do not conflict with each other.

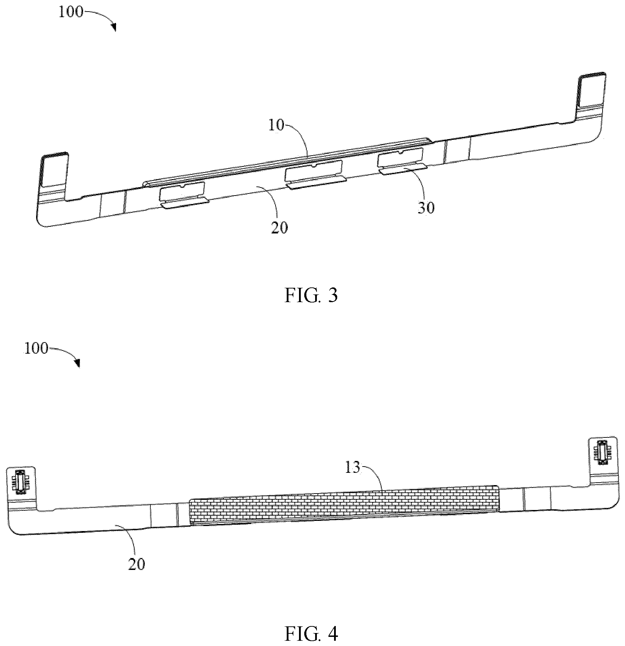

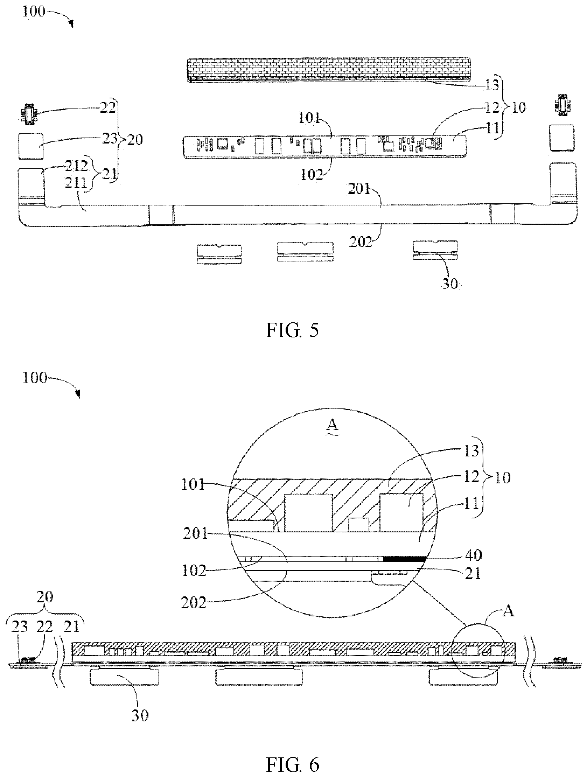

Referring to FIG 3 to FIG 5, FIG 3 is a three-dimensional structural diagram of a battery protection board 100 according to an embodiment of this application, FIG 4 is a three-dimensional structural diagram of the battery protection board 100 in FIG 3 from another perspective, and FIG 5 is a structural exploded view of the battery protection board 100 in FIG 3. This embodiment of this application provides a battery protection board 100 for protection against overcharge, overdischarge, overcurrent, short circuit and the like in a battery. The battery protection board 100 includes a first circuit board 10, a second circuit board 20 connected to the first circuit board 10, and a tab connecting portion 30. The first circuit board 10 is connected to the second circuit board 20 and the tab connecting portion 30. The first circuit board 10 serves as a circuit board with a protection function in the battery protection board 100, the second circuit board 20 is used for connecting to an external device to be powered, and the tab connecting portion 30 is used for connecting to a tab of a battery cell.

In the battery protection board 100 provided in this embodiment of this application, the first circuit board 10 includes a first substrate 11, electronic components 12, and an insulation layer 13. The first substrate 11 includes a first surface 101 and a second surface 102 that are provided back to back with each other, several of electronic components 12 are disposed on the first surface 101, and the insulation layer 13 covers the electronic components 12 on the first surface 101. The second circuit board 20 includes a second substrate 21, and the second substrate 21 includes a third surface 201 and a fourth surface 202 that are provided back to back with each other. The third surface 201 of the second substrate 21 is connected with the second surface 102 of the first substrate 11, and the tab connecting portion 30 is disposed on the fourth surface 202.

Compared with the structure of the battery protection board 1 shown in FIG 1, in this embodiment of this application, the tab connecting portion 30 is disposed on the fourth surface 202 of the second substrate 21, preventing the tab connecting portion 30 from occupying space for welding on the second surface 102 of the first substrate 11, so that sufficient space for welding is reserved on the second surface 102 of the first substrate 11, allowing the third surface 201 of the second substrate 21 to be connected with the second surface 102 of the first substrate 11, which improves reliability of connection between the first circuit board 10 and the second circuit board 20 and optimizes spatial layout of the battery protection board 100.

When a position of the tab of the battery cell changes, compared with a corresponding change of a position of the connecting piece 4 on the rigid board 1 required in the structures shown in FIG 1 and FIG 2, in this embodiment of this application, the tab connecting portion 30 is disposed on the second circuit board 20, so that by changing a position of the tab connecting portion 30 on the second circuit board 20, it is easier to adapt to different tab positions, and the first circuit board 10 may serve as a first circuit board 10 with different structural sizes that an integrated module can be adapted to, ensuring versatility of the first circuit board 10 and thereby improving versatility of the battery protection board 100 to some extent.

When a snap-fit position of a device to be powered changes, compared with redesign of the rigid-flex board as a whole in the structure shown in FIG 5, in this embodiment of this application, only the structural size of the second circuit board 20 needs to be changed correspondingly to adapt to a different snap-fit position of a device to be powered. This ensures versatility of the first circuit board 10, thereby improving versatility of the battery protection board 100 to some extent, and production cost of the battery protection board 100 is relatively low.

In addition, compared with the structure shown in FIG 5 in which there is a risk that the flex board 3 may be crushed if the electronic element 5 on the rigid board 1 of the rigid-flex board is packaged by injection molding, in this embodiment of this application, the first circuit board 10 is separate from the second circuit board 20, and the second circuit board 20 can be prevented from being crushed when the electronic components 12 are packaged by injection molding.

In this embodiment of this application, the insulation layer 13 covers the electronic components 12 on the first surface 101, which allows uniform heat dissipation for all electronic components 12 on the first surface 101. Heat generated by the electronic components 12 is dissipated through the insulation layer 13, and compared with air heat dissipation, a heat dissipation effect by using the insulation layer 13 is better. The insulation layer 13 may also has waterproof and dustproof functions for the electronic components 12, which improves mechanical reliability of the second circuit board 20 and ensures safety performance of the battery protection board 100.

In some embodiments, the insulation layer 13 is directly injection molded on the first substrate 11 through a low-pressure injection molding process, so that gaps between the electronic components 12 are also filled with insulation, which further enhances the protective effect of the insulation layer 13 on the electronic components 12. The insulation layer 13 is made of an insulating material, such as epoxy resin or hot melt adhesive. In some embodiments, the material of the insulation layer 13 has properties of insulation and good thermal conductivity and heat dissipation, thereby improving heat dissipation capability of the electronic components 12. For the material, a phase change material may be chosen, and certainly, heat dissipation plastic may be chosen.

Still referring to FIG 3 to FIG 5, in this embodiment, the first substrate 11 is shaped to a long plate, and the second substrate 21 includes a first section 211 and second sections 212 formed by bending two ends of the first section 211. The second surface 102 of the first substrate 11 is attached to the third surface 201 of the first section 211 in a length direction of the first section 211 to maximize a contact area between the first substrate 11 and the second substrate 21.

In some embodiments, the second surface 102 is fully connected with the third surface 201, so as to ensure reliability of connection between the first circuit board 10 and the second circuit board 20.

Several electronic components 12 are disposed on the first surface 101 of the first substrate 11 facing away from the second substrate 21 and are electrically connected to the first substrate 11. The insulation layer 13 covers the electronic components 12 on the first surface 101 and is joined with the first surface 101 to package all the electronic components 12. The tab connecting portion 30 is disposed on the fourth surface 202 of the second substrate 21 facing away from the first substrate 11 and is electrically connected to the second substrate 21, and the tab connecting portion 30 is located at the first section 211.

The electronic components 12 include at least one of a control integrated chip, a MOS transistor, a resistor, a capacitor, and an inductor. The integrated chip is used to receive a signal and feed the signal back to the MOS transistor, so that the MOS transistor responds accordingly. Specifically, when detecting a voltage overcharge signal, the integrated chip feeds back the overcharge signal to the MOS transistor, and the MOS transistor turns off based on the overcharge signal to stop charging.

In some embodiments of this application, the first substrate 11 is a rigid printed board, and the rigid printed board has characteristics such as densification, high reliability, designability, producibility, and testability, and the rigid printed board has better heat dissipation and higher strength than a flex printed board and is suitable for arranging the electronic components 12 on the battery protection board 100. The rigid printed board includes at least one of a phenolic paper laminate, an epoxy paper laminate, a polyester glass mat laminate, and an epoxy glass cloth laminate.

In some embodiments of this application, the second substrate 21 is a flex printed board, and the flex printed board has characteristics such as bendable, windable, and foldable. Using the flex circuit board can greatly reduce an overall size of the battery protection board 100, enabling to realize development of products towards high density, miniaturization, and high reliability. The flex printed board includes a polyimide or polyester film.

With electronic components 12 being arranged on the rigid printed board and then the rigid printed board as a whole being electrically connected to the flex printed board by means of welding through the bonding pads, the rigid printed board can be produced on a large scale and used in combination with flex printed boards of different shapes and sizes, which greatly broadens the scope of use and flexibility of the printed board.

In some other embodiments of this application, shapes and structures of the first substrate 11 and the second substrate 21 can be set based on actual needs, and this application does not limit the shapes and structures of the first substrate 11 and the second substrate 21.

In some embodiments of this application, the second circuit board 20 further includes connectors 22, at least two connectors 22 are provided, the at least two connectors 22 are disposed at two ends of the second substrate 21 respectively, and the connector 22 is used for connecting to an external device to be powered. The above arrangement makes the second circuit board 20 have a shunting effect, allowing current to flow from the first substrate 11 to the connectors 22 at two ends of the second substrate 21, or to flow from the connectors 22 at two ends of the second substrate 21 to the first substrate 11, which prevents the second circuit board 20 from overheating due to overcurrent, achieving a heat dissipation effect on the second circuit board 20 and thereby allowing the second circuit board 20 to be connected to a high-power device to be powered. In addition, the above arrangement allows convenient assembly of the second circuit board 20 and the device to be powered.

In some embodiments of this application, the battery protection board 100 further includes reinforcing sheets 23, at least two reinforcing sheets 23 are provided, the at least two reinforcing sheets 23 are disposed at two ends of the second substrate 21 respectively, and one reinforcing sheet 23 corresponds to one connector 22. The reinforcing sheets 23 are used for strengthening the connection between the connectors 22 and the second substrate 21, so that the connectors 22 are firmly connected to the second substrate 21, preventing the connectors 22 from falling off the second substrate 21.

The two connectors 22 are disposed on third surfaces 203 of the two second sections 212 and electrically connected to the second substrate 21. The two reinforcing sheets 23 are disposed on fourth surfaces 204 of the two second sections 212 and enforce connections between the two connectors 22 and the second substrate 21, respectively.

Referring to FIG 6, FIG 6 is a schematic structural diagram of a battery protection board 100 according to an embodiment of this application. In some embodiments of this application, the electronic components 12 are electronic components 12 with individual packages, that is, the electronic components 12 are individually provided with a packaging layer to isolate internal elements of the electronic components 12 from the outside, preventing external impurities from corroding internal circuits of the electronic components to cause degradation in electrical performance, and protecting surfaces, connecting leads, and the like of the electronic components to prevent them from being damaged by external force and affected by external environment. Combined with the foregoing insulation layer 13, the electronic components 12 can be better protected.

Before the insulation layer 13 covers all the electronic components 12 on the first surface 101, the electronic components 12 with individual packages have a specific self-protection capability, which is convenient for storage, installation, and transportation. The packaging layer is made of an insulating material, such as epoxy resin or hot melt adhesive.

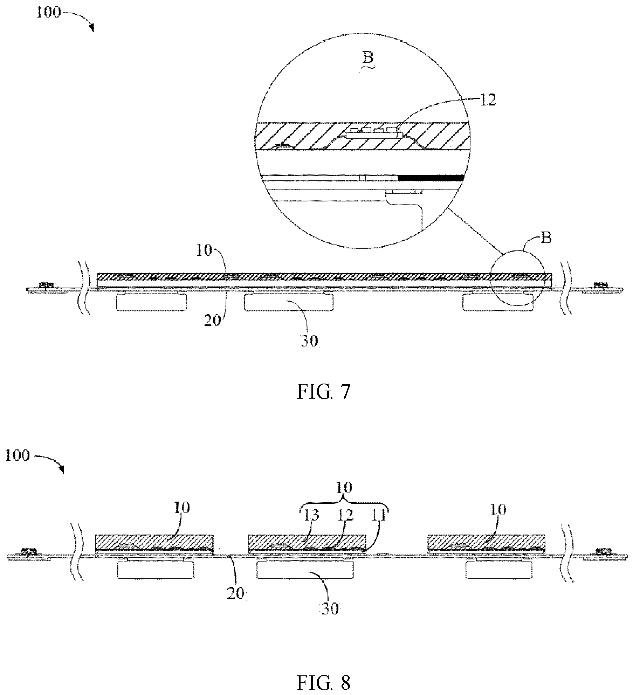

Referring to FIG 7, FIG 7 is a schematic structural diagram of a battery protection board 100 according to another embodiment of this application. In some embodiments of this application, the electronic components 12 are electronic components 12 without individual packages, that is, the electronic components 12 are not individually provided with a separate packaging layer. The above structure reduces thicknesses of the electronic components 12, thereby reducing thickness of the first circuit board 10 and space occupied by the battery protection board 100. In addition, with the individual packages saved, the bill of material of the electronic components 12 can be reduced.

The insulation layer 13 covers the electronic components 12 on the first surface 101 which are without individual packages.

Referring to FIG 8, FIG 8 is a schematic structural diagram of a battery protection board 100 according to still another embodiment of this application. In some embodiments of this application, a plurality of first circuit boards 10 are provided, and the plurality of first circuit boards 10 are connected to the second circuit board 20.

Specifically, the first circuit boards 10 each include a first substrate 11 and several electronic components 12 disposed on the first surface 101 of the first substrate 11, and different first substrates 11 may be configured with different electronic components 12 based on needs, to form a plurality of first circuit boards 10 with different functions. For example, the first substrate 11 of one first circuit board 10 is provided with an integrated chip, and the first substrate 11 of another first circuit board 10 is provided with a MOS transistor. The above arrangement allows a plurality of first circuit boards 10 to be combined in a variety of ways and to be customized or flexibly produced based on needs of customers or products, thereby improving versatility of the battery protection board 100, shortening development cycle of the first circuit board 10, reducing production costs, and improving integration level.

Each first circuit board 10 further includes an insulation layer 13 covering the electronic components 12, so that each first circuit board 10 forms a SIP (System In a Package) module independently, and several SIP modules can be disposed on the second circuit board 20 as integrated elements. For different devices to be powered, different second circuit boards 20 are prepared to adapt to different snap-fit positions, and SIP modules with different protection functions are selected for use to achieve a multi-purpose effect of one module.

The electronic components 12 with individual packages or the electronic components 12 without individual packages may be selected based on needs.

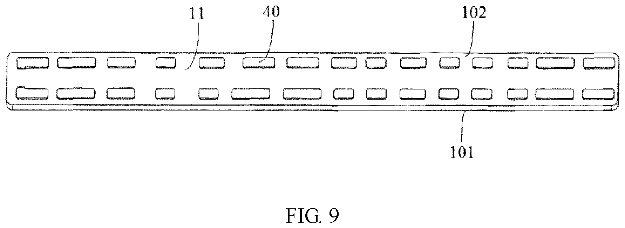

Referring to FIG 6 and FIG 9, FIG 9 is a three-dimensional structural diagram of the first substrate 11 of the battery protection board 100 in FIG 5 from another perspective. In this embodiment of this application, the second surface 102 of the first substrate 11 and the third surface 201 of the second substrate 21 are correspondingly provided with a plurality of sets of bonding pads 40, and the first substrate 11 is connected to the second substrate 21 by welding through the plurality of sets of bonding pads 40. By means of welding through the bonding pads 40, the first substrate 11 and the second substrate 21 can be stably and fixedly connected, and electrical connection between the first substrate 11 and the second substrate 21 can be achieved by welding through the bonding pads 40.

Further, each set of the bonding pads 40 is disposed in a length direction of the second surface 102, and the plurality of sets of bonding pads 40 are disposed in a width direction of the second surface 102, and the bonding pads 40 on the third surface 201 have a one-to-one correspondence with the bonding pads 40 on the second surface 102. The above arrangement makes the plurality of sets of bonding pads 40 spread over the second surface 102 according to a shape and size of the second surface 102, effectively balancing temperature of a welding zone of the first substrate 11 and thereby reducing a temperature rise of the first substrate 11.

Each set of bonding pads 40 is provided with a plurality of separate bonding pads 40. On the second surface 102, the plurality of separate bonding pads 40 are disposed spaced apart in a length direction of the second surface 102, and the plurality of sets of bonding pads 40 are disposed spaced apart in a width direction of the second surface 102.

The shape and size of the bonding pads 40 can be set based on actual needs, and different bonding pads 40 may be set to a same shape or size or different shapes and sizes based on needs.

The width direction of the second surface 102 is perpendicular to the plane of paper on which the structure shown in FIG 6 is located, the length direction of the second surface 102 is perpendicular to the width direction thereof, an angle at which the second surface 102 is shown in FIG 5 is shown as a line segment, and a direction of the line segment is the length direction of the second surface 102.

Further, on the second surface 102, at least two different shapes and sizes of bonding pads 40 are provided, and all bonding pads 40 spread over the second surface 102 asymmetrically to play a role of fool-proofing and prevent the second surface 102 from being attached to the third surface 201 upside down during manual operation.

In some embodiments, some bonding pads 40 are used for electrical connection between the first circuit board 10 and the second circuit board 20, so that the electronic components 12 on the first substrate 11, electronic circuits in the first substrate 11, and electronic circuits on the second substrate 21 together constitute a battery protection circuit.

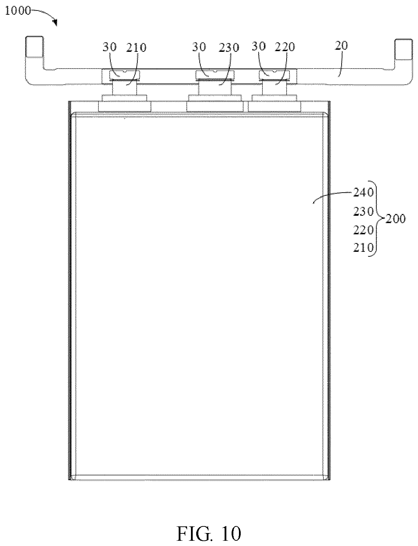

Referring to FIG 10, FIG 10 is a schematic structural diagram of a battery according to yet another embodiment of this application. Based on the same inventive concept, this embodiment of this application further provides a battery 1000. The battery 1000 includes a battery cell 200 and a protection board connected to the battery cell 200, and the protection board is a battery protection board 100 in any one of the foregoing embodiments. Using the battery protection board 100 in the foregoing embodiment optimizes space at the connection between the battery cell 200 and the battery protection board 100 and improves versatility of the battery 1000 to some extent.

The battery cell 200 includes a first tab 210 and a second tab 220 that have a same polarity and a third tab 230 that is opposite in polarity to the first tab 210. Three tab connecting portions 30 are provided on the protection board, and the three tab connecting portions 30 are connected to the first tab 210, the second tab 220, and the third tab 230 respectively.

It should be noted that, in the prior art, when the number of tabs is more than three, it is required to provide on the rigid board the same number of connecting pieces as the tabs to connect to the tabs respectively, which causes a problem of insufficient space for welding on the circuit board more prominent.

However, in the protection board of this embodiment of this application, the tab connecting portions 30 are disposed on the second circuit board 20, which prevents the tab connecting portions 30 from occupying space for welding on the first circuit board 10 and increases a weldable area between the first circuit board 10 and the second circuit board 20. In this way, sufficient space for welding is reserved on the first circuit board 10 for welding the second circuit board 20 onto the first circuit board 10, improving reliability of connection between the first circuit board 10 and the second circuit board 20 and optimizing spatial layout of the protection board.

In this embodiment of this application, the battery cell 200 further includes an electrode assembly 240. The first tab 210, the second tab 220, and the third tab 230 are connected at one end to the electrode assembly 240 and at the other end to the three tab connecting portions 30.

Based on the same inventive concept, this application further provides an electronic device, where the electronic device includes the battery 200 in any one of the foregoing embodiments.

The electronic device in this application is not particularly limited, and the electronic device may be any known electronic device in the prior art.

In some embodiments of this application, the electronic device may be, for example, a mobile phone, a notebook computer, a tablet computer, a wearable device, or a game console.

Based on the same inventive concept, this application further provides a manufacturing method of a battery protection board 100. The method applies to the battery protection board 100 in any one of the foregoing embodiments. The following describes the manufacturing method. The manufacturing method includes the following steps.

S1: Mount electronic components 12 onto a first surface 101 of a first substrate 11 and form, on the first surface 101 of the first substrate 11, an insulation layer 13 covering the electronic components 12 through injection molding to form a first circuit board 10.

Specifically, the first substrate 11 includes the first surface 101 and a second surface 102 that are provided back to back with each other. Firstly, several electronic components 12 are mounted onto the first surface 101 of the first substrate 11 by a placement machine; and after that, the insulation layer 13 covering the electronic components 12 on the first surface 101 is formed by injection molding on the first surface 101 of the first substrate 11 by using an injection mold. The insulation layer 13 is joined with the first surface 101 to package the electronic components 12 on the first surface 101.

S2: Attach the first circuit board 10 onto a third surface 201 of a second circuit board 20.

Specifically, the second circuit board 20 includes a second substrate 21, and the second substrate 21 includes the third surface 201 and a fourth surface 202 that are provided back to back with each other. The second substrate 21 further includes a first section 211 and second sections 212 formed by bending two ends of the first section 211. The second surface 102 of the first substrate 11 of the first circuit board 10 is attached to the third surface 201 of the second substrate 21 of the second circuit board 20.

Fixed connection between the second surface 102 and the third surface 201 is achieved by means of welding.

S3: Attach a tab connecting portion 30 onto the fourth surface 202 of the second circuit board 20.

Specifically, the tab connecting portion 30 is attached to the fourth surface 202 of the second substrate 21 of the second circuit board 20. The tab connecting portion 30 may be fastened to the fourth surface 202 by means of welding.

It should be noted that the order of the foregoing steps may alternatively be determined based on an actual situation, as long as S2 is before S 1. For example, S3 may be performed first, and then S1 and S2 are performed in sequence, or S1 may be performed first, and then S3 and S2 are performed in sequence.

In this embodiment, the tab connecting portions 30 are disposed on the second substrate 20, preventing the tab connecting portions 30 from occupying space for welding on the first circuit board 10, so that sufficient space for welding is reserved on the first circuit board 10 for welding the second circuit board 20 onto the first circuit board 10, improving reliability of connection between the first circuit board 10 and the second circuit board 20 and optimizing spatial layout of the battery protection board 100. In addition, the first circuit board 10 and the second circuit board 20 are separately supplied, and after the first circuit board 10 is made separately, the first circuit board 10 is attached to the second circuit board 20, so that the first circuit board 10 can be adapted to the second circuit boards 20 of different sizes, that is, the first circuit board 10 can be configured for the second circuit boards 20 of different sizes based on needs. In this way, the battery protection board 100 can be matched with different battery products or different devices to be powered, and the second circuit board 20 can be prevented from being crushed when the electronic components 12 are packaged by injection molding.

For the foregoing step S1, step S1 further includes:
providing a jointed board, where the jointed board includes a plurality of first substrates 11 that are interconnected.

Specifically, the first surfaces 101 of all the first substrates 11 are connected with each other to form a first side of the jointed board, and the second surfaces 102 of all the first substrates 11 are connected with each other to form a second side of the jointed board, where the first side and the second side are provided back to back with each other. The jointed board may be rigid printed board.

S101: Mount a set of the electronic components 12 onto the first surface 101 of each of the first substrates 11.

Specifically, a set of the electronic components 12 are mounted onto each of the first surfaces 101 at the first side of the jointed board by using a placement machine.

S102: Form an insulation layer 13 by injection molding on the first surface 101 of the first substrate 11.

Specifically, an insulation layer 13 covering all electronic components 12 at the first side is formed by injection molding on the first side of the jointed board by using an injection mold. The insulation layer 13 is joined with the first side to package all electronic components 12 at the first side.

S103: Break up the jointed board to form a plurality of separate first circuit boards 10.

Specifically, cutting is performed according to an area at which each first substrate 11 is to be located to form a plurality of separate first circuit boards 10.

In this embodiment, the jointed board is provided, and the electronic components 12 are mounted and packaged in sequence on the jointed board, which greatly improves efficiency of manufacturing the first circuit boards 10 and ensures size consistency of the first circuit boards 10.

The foregoing descriptions are merely implementations of this application, but are not intended to limit the patent scope of this application. Any equivalent structural or equivalent process transformations made by using the content of the specification and drawings of this application, or directly or indirectly used in other related technical fields are included in the patent protection scope of this application in the same way.

## Claims

1. A battery protection board, comprising a first circuit board, a second circuit board, and a tab connecting portion, **characterized in that** the first circuit board comprises:
a first substrate, wherein the first substrate comprises a first surface and a second surface that are provided back to back with each other;
electronic components, wherein several of the electronic components are disposed on the first surface; and
an insulation layer, wherein the insulation layer covers the electronic components on the first surface; and
the second circuit board comprises:
a second substrate, wherein the second substrate comprises a third surface and a fourth surface that are provided back to back with each other; and
the third surface is connected with the second surface, and the tab connecting portion is disposed on the fourth surface.

2. The battery protection board according to claim 1, **characterized in that** the electronic components are electronic components with individual packages.

3. The battery protection board according to claim 1, **characterized in that** the electronic components are electronic components without individual packages.

4. The battery protection board according to claim 2 or 3, **characterized in that** the first circuit board is provided in plurality, and the plurality of first circuit boards are connected to the second circuit board.

5. The battery protection board according to claim 1, **characterized in that** the second surface and the third surface are correspondingly provided with a plurality of sets of bonding pads, and the first substrate is connected to the second substrate by welding through the plurality of sets of bonding pads.

6. The battery protection board according to claim 5, **characterized in that** each set of the bonding pads is disposed in a length direction of the second surface, and the plurality of sets of bonding pads are disposed in a width direction of the second surface.

7. The battery protection board according to claim 1, **characterized in that** the second circuit board further comprises connectors, wherein the connectors are at least two, and the at least two connectors are disposed at two ends of the second substrate respectively.

8. The battery protection board according to claim 1, **characterized in that** the first substrate is a rigid printed board, and the second substrate is a flex printed board.

9. A battery, comprising a battery cell and a protection board connected to the battery cell, **characterized in that** the battery protection board is the battery protection board according to any one of claims 1 to 8.

10. The battery according to claim 9, **characterized in that** the battery cell comprises a first tab and a second tab that have a same polarity and a third tab that is opposite in polarity to the first tab; and
three tab connecting portions are provided on the protection board, wherein the three tab connecting portions are connected to the first tab, the second tab, and the third tab respectively.

11. An electronic device, **characterized by** comprising:
the battery according to claim 9 or 10.

12. A manufacturing method of battery protection board, **characterized by** comprising the following steps:
mounting electronic components onto a first surface of a first substrate and forming, on the first surface of the first substrate, an insulation layer covering the electronic components through injection molding to form a first circuit board;
attaching the first circuit board onto a third surface of the second circuit board; and attaching a tab connecting portion onto a fourth surface of the second circuit board.

13. The manufacturing method according to claim 12, **characterized in that** the mounting electronic components onto a first surface of a first substrate and forming, on the first surface of the first substrate, an insulation layer covering the electronic components through injection molding to form a first circuit board further comprises:
providing a jointed board, wherein the jointed board comprises a plurality of first substrates that are interconnected;
mounting a set of the electronic components onto the first surface of each of the first substrates;
forming an insulation layer by injection molding on the first surface of the first substrate; and
breaking up the jointed board to form a plurality of separate first circuit boards.
